Europäisches Patentamt

European Patent Office

Office européen des brevets

(19)

(11) Veröffentlichungsnummer: **0 022 917**
**B1**

(12) **EUROPÄISCHE PATENTSCHRIFT**

(45) Veröffentlichungstag der Patentschrift: **28.12.83**

(21) Anmeldenummer: **80103061.0**

(22) Anmeldetag: **02.06.80**

(51) Int. Cl.³: **E 01 F 9/01,** E 01 F 15/00,
F 03 D 9/00, G 08 B 19/02
//G09F7/22

(54) Hohler Strassenleitpfahl.

(30) Priorität: **01.06.79 DE 2922474**
**30.07.79 DE 2930829**

(43) Veröffentlichungstag der Anmeldung:
**28.01.81 Patentblatt 81/4**

(45) Bekanntmachung des Hinweises auf die Patenterteilung:
**28.12.83 Patentblatt 83/52**

(84) Benannte Vertragsstaaten:
**AT BE DE FR GB IT NL SE**

(56) Entgegenhaltungen:
CH - A - 480 625
DE - A - 1 534 546
DE - A - 2 108 928
DE - A - 2 209 316
DE - A - 2 609 726
DE - U - 7 927 100
FR - A - 398 236
FR - A - 400 143
FR - A - 2 076 377
FR - A - 2 179 303
FR - E - 17 178

(73) Patentinhaber: **Ries, Walter**
**Von-Salza-Strasse 60**
**D-6990 Bad Mergentheim (DE)**

(72) Erfinder: **Ries, Walter**
**Von-Salza-Strasse 60**
**D-6990 Bad Mergentheim (DE)**

(74) Vertreter: **Pätzold, Herbert, Dr.-Ing.**
**Mühlthaler Strasse 102**
**D-8000 München 71 (DE)**

(56) Entgegenhaltungen:
GB - A - 780 236
GB - A - 845 612
LU - A - 62 883
US - A - 1 499 223
US - A - 1 738 840

Courier Press, Leamington Spa, England.

# Hohler Straßenleitpfahl

Die Erfindung betrifft einen hohlen Straßenleitpfahl für einen oder mehrere zur Markierung eines Straßenrandes vorgesehene Reflektoren an einem innerhalb des Pfahles beweglichen Reflektorträger, der mit einer ein Drehmoment abgebenden Antriebsvorrichtung zur langsamen Bewegung des Reflektorträgers gekuppelt ist, welche wenigstens ein windangetriebenes Windrad aufweist, wobei abwechselnd jeweils ein Abschnitt des Reflektors vor einer Reflektorsichtöffnung in dem Pfahl bewegt ist und ein anschließender Abschnitt des Reflektors sich zur oberflächlichen Reinigung im Kontakt mit einer innerhalb des Pfahles fest angeordneten Reinigungsvorrichtung befindet.

Ein Straßenleitpfahl der vorstehenden Art ist bereits durch die DE—A—2 108 928 bekannt geworden, bei der ein außerhalb des Pfahles an seinem Kopfende angeordnetes Windrad über eine innerhalb des Pfahles gelagerte Welle unmittelbar einen mit der Welle fest verbundenen zylindrischen Reflektorträger antreibt, der an seiner Außenfläche einen Reflektor trägt, welcher durch die Drehbewegung des Reflektorträgers einerseits an Reinigungsvorrichtungen innerhalb des Pfahles und andererseits an den im Pfahl vorhandenen Reflektorsichtöffnungen vorbeibewegt wird.

Die Anordnung von Reflektoren auf der Außenfläche eines zylindrischen Reflektorträgers, wobei die Reflektoren entsprechend der Krümmung der Zylinderoberfläche entsprechend gekrümmt sind, ist nachteilig, weil die Reflektion solcher Reflektoren durch die Reflektorsichtöffnungen hindurch gegenüber herkömmlichen entsprechenden Reflektoren mit flacher, ebener Reflektionsfläche wesentlich vermindert ist. Weiterhin ist es von Nachteil, daß die gesamte Zylinderoberfläche des Reflektorträgers mit einem Reflektor überdeckt sein muß, damit in jeder Drehstellung des Reflektorträgers Reflektorabschnitte sich vor den Reflektorsichtöffnungen befinden.

Außerdem ist eine gegebenenfalls erforderliche Abdichtung zwischen den Innenrändern der Reflektorsichtöffnungen in den flachen, ebenen Wänden des Pfahles mit im wesentlichen dreieckigem Querschnitt und der zylindrischen Oberfläche des Reflektors auf dem zylindrischen Reflektorträger erschwert. Schließlich ist der Drehwiderstand des Reflektorträgers relativ groß, weil die Antriebswelle für den Reflektorträger über ein dichtes Gehäuselager in der kopfseitigen Wandung des Pfahles nach außen zum Windrad geführt werden muß und weil die Reinigungsvorrichtungen im Pfahl beidseitig der länglichen Reflektorsichtöffnung über die gesamte Länge der Öffnung angeordnet sein müssen.

Der unmittelbare Antrieb des zylindrischen Reflektorträgers über ein außerhalb des Pfahles angeordnetes Windrad ist daher wegen der hohen Reibungseinflüße nicht sichergestellt. Außerdem können die außerhalb der Pfähle angeordneten Windräder bei Verkehrsunfällen eine Gefährdung für am Unfall beteiligten Personen darstellen. Weiterhin können die Fahrer von Kraftfahrzeugen durch die laufenden Windräder irritiert oder abgelenkt werden und vor allem Kinder werden allzu leicht verführt, die Windräder als Spielobjekt zu betrachten. Schließlich ist es ungünstig, wenn die Windräder insbesondere im Winter der Witterung ungeschützt ausgesetzt sind. Schon leichte Vereisungen können den Antrieb der Reflektor- träger durch Windräder außerhalb der Pfähle zum Erliegen bringen. Aber gerade bei solchen Witterungen ist die Funktionssicherheit der Pfähle besonders wichtig, insbesondere wenn die Reflektoren durch den Wechsel der Färbung des reflektierten Lichtes in Abhängigkeit von der Temperatur auch die Gefahr von Glatteis anzeigen sollen.

Aufgabe der Erfindung ist es, einen Straßenleitpfahl der eingangs genannten Art anzugeben, der die aufgezeigten Schwierigkeiten des bekannten Straßenleitpfahles weitgehend vermeidet. Insbesondere sollen in einem hohlen Straßenleitpfahl auch von bekannter Gestalt mit im wesentlichen dreieckigem Querschnitt ebene, flache Reflektoren auf einem bewegten Reflektorträger untergebracht werden können, die gleich gute Reflektionseigenschaften wie bekannte ebene, flache Reflektoren an den Außenflächen von herkömmlichen Straßenleitpfählen aufweisen. Der Antrieb des Reflektorträgers soll mit möglichst geringem Energieaufwand durch ein Windrad möglich sein, daß vor allem frei von Witterungseinflüßen ist, keine Irritationen oder Ablenkungen im Straßenverkehr darstellt, vor Kindern weitgehend geschützt ist und keine Unfallgefahr bei Verkehrsunfällen darstellt.

Die vorstehende Aufgabe wird bei einem Straßenleitpfahl der eingangs genannten Art mit den kennzeichnenden Merkmalen des Anspruches 1 gelöst. Vorteilhafte Ausführungen nach der Erfindung ergeben sich aus den Merkmalen der Unteransprüche.

Die durch die Erfindung erzielten Vorteile sind im wesentlichen darin zu sehen, daß der Reflektorträger nicht innerhalb des hohlen Straßenleitpfahles gedreht, sondern auf- und abbewegt wird. Hierdurch ist es möglich, die äußere Gestalt des Reflektorträgers dem freien Innenraum des hohlen Straßenleitpfahles besonders anzupassen. Dabei lassen sich auf äußeren, ebenen Flächenabschnitten des Reflektorträgers ebene, flache Reflektoren anbringen, die den gestellten Anforderungen an die Reflektionseigenschaften gerecht werden und die sich außerdem dicht vor den inneren Öffnungsrändern der Reflektorsichtöffnungen in den ebenen, flachen Wänden des Straßenleitpfahles bewegen lassen. Hierdurch bestehen keine wesentlichen Abdichtungsprobleme zwischen den inneren Öffnungsrändern der Reflektorsichtöffnungen und den äußeren Flächen des Reflektors bzw. des Reflektorträgers. Dadurch, daß der Reflektorträger auf- und abbewegt wird, können die Reinigungsvorrichtungen oberhalb und unterhalb der schmalen Öffnungsränder der länglichen Reflektorsichtöffnung angebracht werden, so daß die Reibungseinflüße beim Vorbeibewegen der Reflektoren an den Reinigungsvorrichtungen relativ gering gehalten werden können.

Der Antrieb des Reflektorträgers durch eine an sich bekannte Reversierspindel mit sich überkreuzenden rechts- und linksdrehenden Schneckengewinden ist besonders vorteilhaft, weil die Spindel zum Antrieb der Auf- und Abwärtsbewegung des Reflektorträgers nur in einer Drehrichtung gedreht werden muß. Dabei läßt sich die Spindel mit dem zugehörigen Läufer auf einfache Weise in Kunststoff fertigen.

Ein wesentlicher Vorteil der Erfindung besteht darin, daß das Windrad zum Antrieb der Reversierspindel innerhalb des Straßenleitpfahles angeordnet ist. Hierdurch ist das Windrad vor Witterungseinflüßen weitgehend geschützt, Kraftfahrer werden durch ein sich drehendes Windrad außerhalb des Pfahls weder irritiert noch abgelenkt, Jugendliche werden weniger dazu verführt, das Windrad als Spielobjekt zu mißbrauchen und die Unfallgefahr durch ein Windrad außerhalb des Pfahles, der an einem Verkehrsunfall beteiligt ist, wird vermieden.

Um die von an einem Pfahl vorbeifahrenden Fahrzeugen ausgelösten Windkräfte als Antriebsenergie für das im Pfahl unterbrachte Windrad wirksam ausnutzen zu können, weist der Pfahl geeignete Windöffnungen auf, über die das Windrad von dem Wind optimal beaufschlagt wird. Außerdem ist zwischen das Windrad und der Reversierspindel ein die Drehrichtung des Windrades untersetzendes Getriebe angeordnet.

Die Erfindung wird lediglich anhand zweier Ausführungsbeispiele beschrieben und erläutert, die in der zugehörigen Zeichnung schematisch dargestellt sind. Hierin zeigt:

Figur 1 einen Längsschnitt durch den oberen Teil eines ersten Ausführungsbeispieles eines erfindungsgemäßen Straßenleitpfahles

Figur 2 einen Längsschnitt durch den an Fig. 1 anschließenden unteren Teil des Straßenleitpfahles und

Figuren 3a—9 Einzelteile eines weiteren Ausführungsbeispieles.

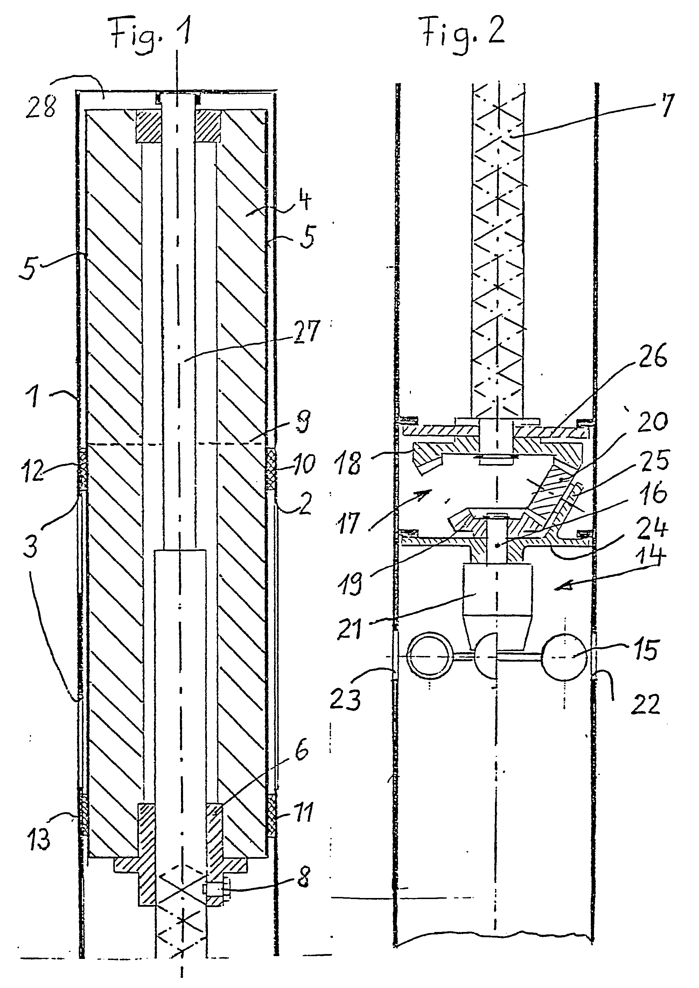

Fig. 1 zeigt in schematischer Darstellung im Längsschnitt den oberen Teil eines erfindungsgemäßen Straßenleitpfahles. An diesen oberen Teil des Straßenleitpfahles schließt der in Fig. 2 im Längsschnitt dargestellte untere Teil des Straßenleitpfahles an. Das unterste Fußende des Straßenleitpfahles, des vielfach in den Boden am Straßenrand eingelassen ist, ist in Fig. 2 nicht dargestellt.

Der Strassenleitpfahl 1 besteht aus einem in Längsrichtung vorteilhafterweise zweigeteilten hohlen Kunststoffgehäuse. Er kann einen herkömmlichen, im wesentlichen dreieckigen Querschnitt mit abgerundeten Ecken oder auch jeden anderen, insbesondere auch einen runden Querschnitt aufweisen. An gegenüberliegenden Längsseiten des Strassenleitpfahles befinden sich eine längliche Öffnung 2 und zwei runde Öffnungen 3. Die Öffnungen 2 und 3 haben im wesentlichen die Gestalt des einen länglichen Reflektors an der einen Seite und der beiden runden Reflektoren an der gegenüberliegenden anderen Seite eines herkömmlichen Strassenleitpfahles. Die Öffnungen 2 und 3 befinden sich auch in den entsprechenden Höhen oberhalb der Strasse wie die Reflektoren an den bekannten Strassenleitpfählen.

Innerhalb des hohlen Strassenleitpfahles ist ein hülsenartiger Reflektorträger 4 zum Beispiel aus Kunststoff angeordnet, dessen Aussenflächen sind entweder selbst als Reflektorflächen 5 ausgebildet oder tragen an gegenüberliegenden Längsseiten streifenförmige Reflektoren. Der Reflektorträger 4 weist eine dem hohlen Innenraum des Strassenleitpfahles angepasste Gestalt auf und besitzt einen solchen Querschnitt, daß Abschnitte der Reflektorflächen dicht hinter den Öffnungen 2 und 3 zu liegen kommen, wie in Fig. 1 schematisch verdeutlicht.

Das untere Ende des Reflektorträgers 4 ist mit einem Läufer 6 fest verbunden, der auf einer an sich bekannten Reversierspindel 7 auf- und abläuft, wenn diese in einer Drehrichtung angetrieben wird. Der Läufer 6 und die Reversierspindel 7 können aus Kunststoff bestehen. In die sich kreuzenden rechts- und linksdrehenden Schneckengewinde der Spindel greifen zwei Steuerbolzen 8 ein, von denen in Fig. 1 nur einer dargestellt ist.

Reversierspindeln mit auf- und ab- bzw. hin- und herlaufenden Läufern mit Bolzensteuerungen sind z.B. in der Textilindustrie bekannt, so dass sich eine nähere Beschreibung der Reversierspindel und ihres Läufers erübrigt.

Wird die im Strassenleitpfahl drehbar und axial unverschieblich gelagerte Reversierspindel in einer Drehrichtung angetrieben, so bewegt sich der Läufer 6 mit dem Reflektorträger 4 während der Drehbewegung der Spindel 7 über die durch die Länge des Schneckengewindes bestimmte Höhe ständig auf und ab. In Fig. 1 nimmt der Läufer 6 gerade seine oberste Stellung ein. In der untersten Stellung des Läufers 6 befindet sich die obere Stirnfläche des Reflektorträgers 4 in der mit 9 gekennzeichneten gestrichelten Lage.

An Innenwänden des Strassenleitpfahles 1 befinden sich oberhalb und unterhalb der länglichen Öffnung 2 sowie oberhalb der oberen runden Öffnung 3 und unterhalb der unteren runden Öffnung 3 Reinigungsvorrichtungen 10 bis 13, an deren Innenflächen die streifenförmigen Reflektoren 5 über ihrer gesamten Breite anliegen. Eine weitere Reinigungsvorrichtung kann auch zwischen den runden Öffnungen vorgesehen sein. Beim Auf- und Abbewegen des hülsenartigen Reflektorträgers 4 mit den Reflektoren 5 werden diese im Kontakt mit den Reinigungsvorrichtungen oberflächlich gesäubert. Die Reinigungsvorrichtungen 10 bis 13 sind in Fig. 1 nur schematisch dargestellt. Sie besitzen mindestens die Breite der länglichen Öffnung 2 bzw. die Länge des Durchmessers der runden Öffnungen 3. Die streifenförmigen Reflektoren 5 besitzen mindestens entsprechende Breiten. Der Reflektorträger 4 mit den streifenförmigen Reflektoren 5 besitzt eine solche axiale Länge, dass in der untersten und in der obersten Stellung des Läufers 6 stets Abschnitte der Reflektoren 5 vor den Öffnungen 2 und 3 zu liegen kommen. Das heisst in jeder Stellung des Reflektorträgers 4 liegen hinter den Öffnungen 2 und 3 Abschnitte der Reflektoren 5, die in anderen Stellungen des Reflektorträgers 4 in Kontakt mit den Reinigungsvorrichtungen 10 bis 13 waren.

Aufgrund des Auf- und Ablaufens des Läufers 6 mit dem Reflektorträger 4 bei einer Drehbewegung der Reversierspindel 7 laufen somit die Reflektoren 5 an den Reinigungsvorrichtungen 13 vorbei, wobei sie oberflächlich gesäubert werden, so dass immer wieder frisch gereinigte Reflektorabschnitte vor die Öffnungen 2 und 3 des Strassenleitpfahles bewegt werden. Bei den Reinigungsvorrichtungen kann es sich z.B. um Reinigungskissen handeln, die aus einem feuchten Kunststoffgel bestehen.

Die Reinigungskissen können auch aus mit Reinigungsflüssigkeit getränkten porösen, filz- oder schwammartigen Kunststoffkörpern bestehen.

Innenseitig befinden sich an den Rändern der Öffnungen 2 und 3 des Strassenleitpfahles 1 vorteilhafterweise weitgehend reibungsarme Dichtungen, an denen die Reflektoren 5 staub- und flüssigkeitsdicht zur Anlage kommen. Hierdurch wird das Eindringen von Feuchtigkeit und Schmutz in den Pfahl weitgehend vermieden. Ausserdem werden bereits grobe Schmutzteilchen an den Reflektoren von den anliegenden Dichtungen zurückgehalten, so dass diese mit den Reinigungskissen nicht in Kontakt kommen.

Die Reinigungsvorrichtungen können auch aus bürstenartigen Körpern bestehen, die nahe den Öffnungen 2 und im Pfahl angebracht sind. Besonders zweckmässig ist es hierfür, wenn die Strassenleitpfähle jeweils aus zwei spritzgegossenen Kunststoffhalbschalen zusammengesetzt sind, wobei die bürstenartigen Reinigungskörper auch einstückig mit den spritzgegossenen Kunststoffhalbschalen sein können. Das heisst vorteilhafterweise werden die bürstenartigen Reinigungsvorrichtungen an den Innenflächen der Kunststoffhalbschalen in der Spritzgussform für diese Kunststoffhalbschalen gleich mitgefertigt.

Fig. 2 zeigt eine Ausführung eines insbesondere vom Fahrtwind vorbeifahrender Fahrzeuge angetriebenen Spindelantriebes mit einem Windrad 14, das im Beispielsfalle ohne jede Beschränkung aus einem Schalenstern 15 besteht, der eine Welle 16 entreibt, die über ein Kegelradgetriebe 17 mit zwei Kegelrädern 18 und 19 und einem Stirnrad 20 die Reversierspindel 7 nur in einer Drehrichtung antreibt. In entgegengesetzter Drehrichtung des Windrades 14 besitzt dieses einen nicht dargestellten Frei lauf, der hier in dem Getriebegehäuse 21 untergebracht ist. Derartige Windräder 14 mit Schalensternen 15 sind in ähnlichen Ausführungen z.B. als Windgeschwindigkeitsmesser bekannt. Die Achse des Windrades 14 liegt im Beispielsfalle in Richtung der Spindelachse. In der Rotationsebene des Schalensternes 15 befinden sich in der Wandung des Strassenleitpfahles mehrere Windein- bzw. Windaustrittsöffnungen 22, 23.

Die jeweilige Leistung des Windrades 14 im Pfahl 1 hängt ausser von der Windgeschwindigkeit auch von der Anordnung der Windöffnungen 22, 23 und der Gestalt dieser Öffnungen in den Wandungen des Strassenleitpfahles ab. Zweckmässigerweise besitzen die Ein- und Auslassöffnungen besondere Ein- und Auslassprofile, die zwar in Fig. 2 nicht dargestellt sind, für den Fachmann aber ohne weiteres naheliegend sind. Die Hub- und Senkgeschwindigkeit des Läufers 6 mit dem Reflektionsträger 4 für die Reflektoren 5 hängt auch von der Auslegung des Kegelradgetriebes und der Steigung der Reversierspindel ab. In dem Getriebegehäuse 21 befindet sich weiterhin ein nicht dargestelltes dem Fachmann gleichfalls geläufiges Untersetzungsgetriebe, um die Drehbewegung des Windrades 14 zu untersetzen.

Zur Vermeidung von Luftturbulenzen im Strassenleitpfahl 1 und damit zur Vermeidung von Antriebsstörungen des Windrades 14 kann es vorteilhaft sein, im Strassenleitpfahl spezielle Windaustrittsöffnungen vorzusehen. Solche hier nicht dargestellten Öffnungen können unterhalb und/oder oberhalb der Öffnungen 21, 22 vorhanden sein.

Das Windrad 14 ist im Beispielsfalle an einer Trägerplatte 24 fest, die eine Öffnung zum Durchtritt der Windradwelle 16 aufweist. Die Trägerplatte 24 ist ihrerseits an inneren Vorsprüngen oder Nuten im Strassenleitpfahl 1 gehalten. Am Ende der Welle 16 ist das Kegelrad 19 fest. Das Stirnrad 20 zwischen den beiden Kegelrädern 18 und 19 ist an einem Haltearm 25 an der Trägerplatte 24 gelagert. Vorteilhafterweise dichtet die Trägerplatte 24 den Raum oberhalb der Trägerplatte 24 im Pfahl 1 von dem Raum unterhalb der Trägerplatte 24 für das Windrad 14 weitgehend dicht ab.

Die Spindel 7 ist an ihrem unteren Ende auf einer Platte 26 drehbar gelagert, die an weiteren inneren Vorsprüngen oder Nuten im Strassenleitpfahl 1 mit festem Abstand von der Trägerplatte 24 festgehalten ist. Das Kegelrad 18 ist an einem Wellenansatz fest, der durch eine Öffnung in der Platte 26 greift. Die Spindel 7 ist nach oben durch eine Stange 27 verlängert, deren oberes freies Ende in der oberen Abschlusswand 28 des Strassenleitpfahles 1 drehbar gelagert ist. Die Stange 27 dient als Führung für den Reflektionsträger 4 mit den beiden gegenüberliegenden Reflektoren 5.

Sind eine oder mehrere Öffnungen 22, 23 von natürlichen oder von einem durch ein vorbeifahrendes Fahrzeug erzeugten Wind beaufschlagt, so wird der Schalenstern 15 des Windrades 14 in eine Umdrehung versetzt, die über das Kegelradgetriebe 17 die Spindel 7 in Umdrehung versetzt. Ist die Windbeaufschlagung des Schalensterns derart, dass sich der Schalenstern in der entgegengesetzten Richtung dreht, dann wird der Freilauf des Windrades 14 wirksam mit der Folge, dass die Spindel 7 nicht angetrieben wird. Ein Freilauf des Windrades 14 ist nicht erforderlich, wenn durch die Gestalt der Windeinlassöffnungen und der Ausbildung des Windrades sichergestellt ist, dass es sich im wesentlichen nur in einer Drehrichtung dreht. Statt eines Schalensterns kann auch ein Flügelrad verwendet werden, wie es in ähnlicher Weise auch in Anemometern zum Einsatz kommt. Die Welle des Windrades kann besonders reibungsarm in einer mit Teflon beschichteten Lagerschale spitzengelagert sein.

Die Spindel 7 mit dem Läufer 6 und dem Reflektorträger 4 bestehen vorzugsweise aus Kunststoff. Aber auch das Kegelradgetriebe 17 und das Windrad 14 mit dem Schalenstern 15 oder einem Flügelrad können vorteilhafterweise aus Kunststoff bestehen.

Die Reflektoren können aus herkömmlichen Materialien gewählt sein, die ein ausreichend hohes Reflektionsvermögen aufweisen. Besonders vorteilhaft ist es aber, wenn die Reflektoren aus einem an sich bekannten Material gewählt sind, das in Abhängigkeit von der Aussentemperatur wenigstens zwei verschiedene Färbungen annimmt, so dass das von den Reflektoren reflektierte Licht bei glatteisgefährlichen Aussentemperaturen von dem bei glatteisungefährlichen Aussentemperaturen reflektiertem Licht von dem Fahrer eines Fahrzeuges deutlich unterscheidbar ist. Der Farbwechsel kann im Gefrierpunktbereich z.B. von hellgelb (glatteisungefährlich) nach rot (Glatteisgefahr) wechseln. Derartige bei unterschiedlichen Temperaturen ihre Farbe wechselnden Stoffe sind z.B. als Temperaturanzeiger bekannt.

Solche als Reflektoren von Strassenleitpfählen verwendete folienartige Stoffe können vorteilhafterweise auf dem beweglichen Reflektorträger 4 des vorstehend beschriebenen sich selbst reinigenden Strassenleitpfahles 1 angeordnet sein.

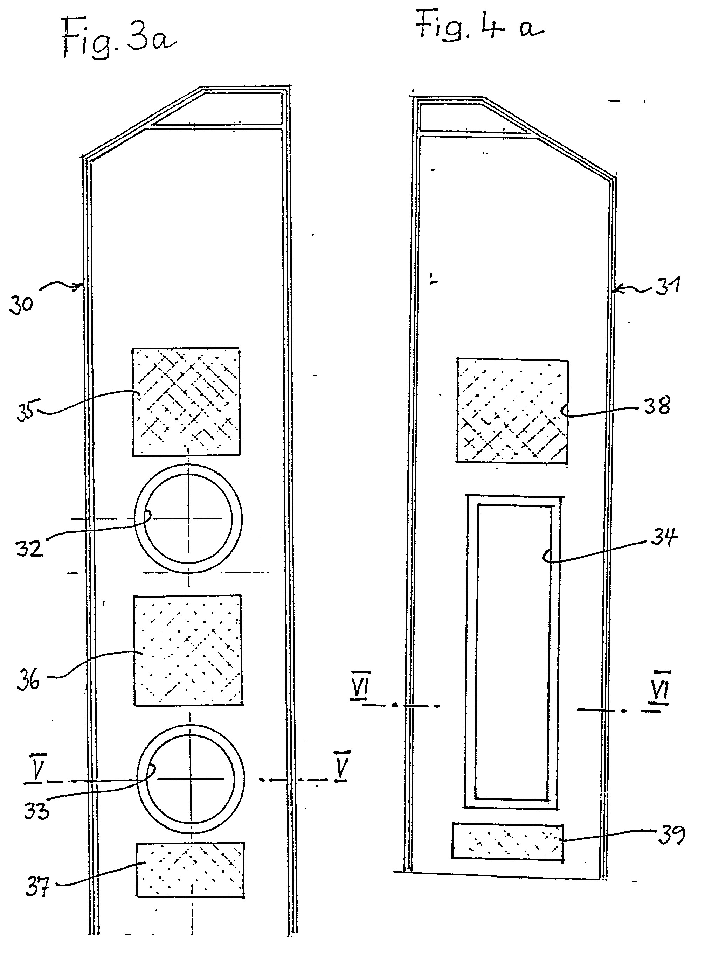

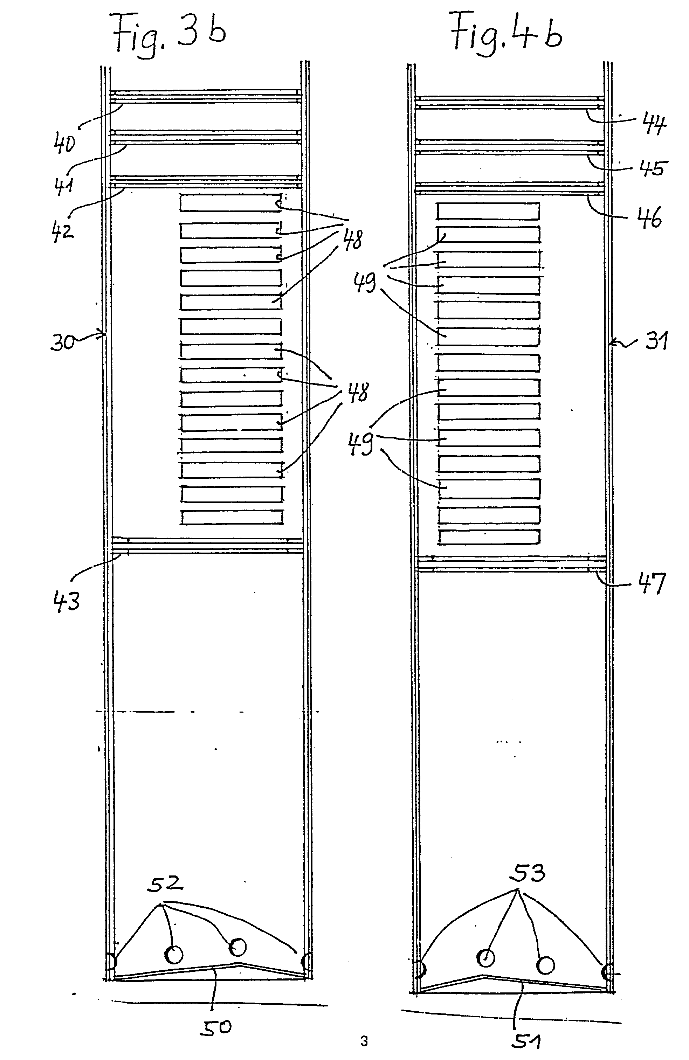

Fig. 3 bis 9 zeigen ein weiteres Ausführungsbeispiel eines erfindungsgemässen Strassenleitpfahles, der aus zwei einteiligen Kunststoffgehäusehälften 30, 31 in Längsrichtung des Pfahles zusammengesetzt ist. Fig. 3a zeigt die Innenansicht des oberen Abschnittes der einen Gehäuselängshälfte 30. An den oberen Abschnitt schliesst der in Fig. 3b gezeigte untere Abschnitt der Gehäuselängshälfte 30 an. Fig. 4a und Fig. 4b zeigen entsprechend die Innenansichten des oberen und unteren Abschnittes der anderen Gehäuselängshälfte 31 des Strassenleitpfahles. In der Längshälfte 30 sind zwei runde Öffnungen 32, 33 und in der anderen Gehäuselängshälfte 31 ist eine längliche Öffnung 34 vorhanden. Die runden Öffnungen 32, 33 entsprechen den runden Öffnungen 3 in Fig. 1 und die längliche Öffnung 34 entspricht der länglichen Öffnung 2 in Fig. 1. Oberhalb, zwischen und unterhalb der runden Öffnungen 32, 33 befinden sich Reinigungsvorrichtungen 35 bis 37. Oberhalb und unterhalb der länglichen Öffnung 34 sind zwei Reinigungsvorrichtungen 38, 39 angeordnet. Bei diesen Reinigungsvorrichtungen kann es sich um bereits erwähnte kissenartige oder bürstenartige Ausführungen handeln, von denen die kissenartigen Ausführungen innenseitig in die Gehäuselängshälften 30, 31 z.B. eingeklebt sind, während die bürstenartigen Ausführungen einteilig mit den Gehäuselängshälften sein können.

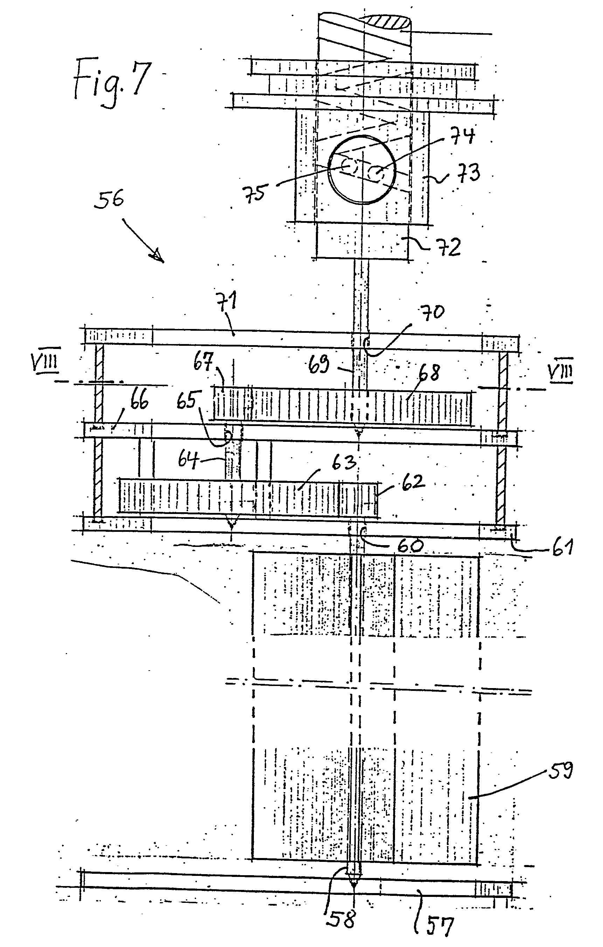

In den unteren Abschnitten der beiden Gehäuselängshälften 30 und 31 befinden sich innenseitig gleichartige paarweise einander gegenüberliegende Nutenprofile 40 bis 43 und 44 bis 47, die im zusammengesetzten Zustand der beiden Gehäuselängshälften 30 und 31 die Platinen des in Fig. 7 vergrössert dargestellten Windradgetriebes 56 halten.

Zwischen den Nutenprofilen 42 und 43 bzw. 46 und 47 beiden Gehäuselängshälften 30 und 31 befinden sich im Beispielsfalle 14 in einer Reihe übereinander angeordnete schlitzartige Windeintrittsöffnungen 48 und entsprechende Windaustrittsöffnungen 49. An den unteren Enden der Gehäuselängshälften 30 und 31 befinden sich oberhalb eines kegelförmigen Pfahlbodens 50, 51 mehrere Öffnungen 52, 53 zum Abfliessen von über die Windein- und -austrittsöffnungen gegebenenfalls eingetretenen Regenwassers.

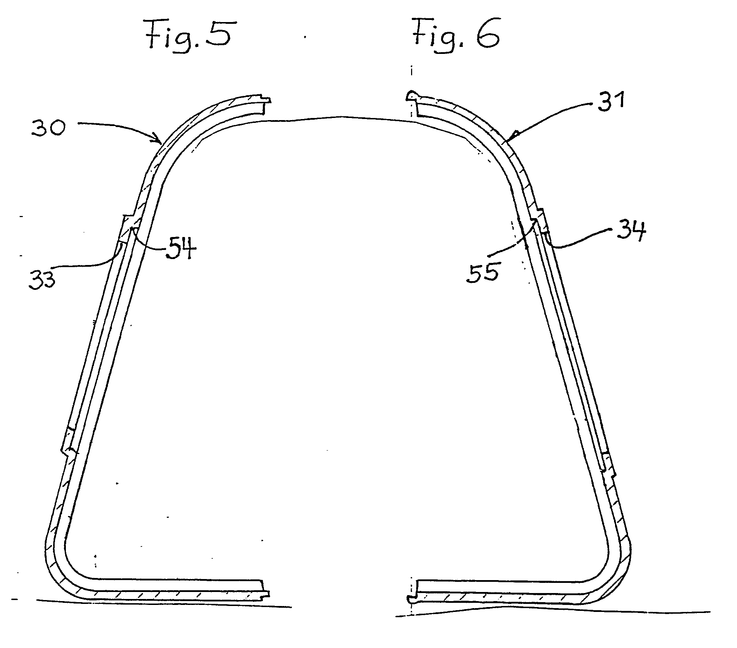

Die. Fig. 5 und 6 zeigen Schnitte in vergrösserter Darstellung entlang den Schnittlinien V—V in Fig. 3a und VI—VI in Fig. 3b. Wie Fig. 5 und 6 verdeutlichen, lassen sich die Innenränder der Gehäuselängshälften 30 und 31 derart ausbilden, dass die Gehäuselängshälften mittels eines elastischen Schnappeffektes zu einem fertigen Strassenleitpfahl zusammengeschnappt werden können. Die Öffnungsränder 54, 55 der Öffnungen 32, 33 und 34 weisen jeweils solche inneren Profile auf, dass nicht dargestellte Dichtungen einsetzbar sind, an denen die von dem Reflektorträger gehaltenen Reflektoren dicht zur Anlage kommen. Der Reflektorträger mit den Reflektoren können entsprechend der in Fig. 1 gezeigten Ausführung ausgebildet sein.

Fig. 7 zeigt ein Windradgetriebe 56 in einem grösseren Massstab als die Gehäuselängshälften 30 und 31 in Fig. 3 und 4. Auf einer unteren Platine 57 ist die Welle 58 eines beispielsweise 5-flügeligen Flügelrades 59 spitzengelagert. Die Platine 57 greift mit ihren Rändern in die Naturprofile 43 und 47 ein. Die Welle 58 greift mit ihrem oberen Ende durch eine Öffnung 60 in einer mittleren Platine 61, die mit ihren Rändern in die Nutenprofile 42, 46 eingreift. Das obere Ende der Welle 58 ist mit einem kleineren Zahnrad 62 verbunden, das mit einem grösseren Zahnrad 63 kämmt, dessen Welle 64 auf der mittleren Platine 61 spitzengelagert ist. Die Welle 64 greift mit ihrem oberen Ende durch eine Öffnung 65 in einer oberen Platine 66, deren Ränder in die Nutenprofile 41, 45 eingreifen. Am oberen Ende der Zahnradwelle 64 befindet sich ein kleineres Zahnrad 67, das mit einem grösseren Zahnrad 68 kämmt, dessen Welle 69 auf der mittleren Platine spitzengelagert ist. Die Welle 69 greift schliesslich durch eine Öffnung 70 in einer Deckplatine 71, die mit ihren Rändern in die Nutenprofile 40, 44 eingreift. Die Welle 69 ist mit dem unteren Ende einer Reversierspindel 72 verbunden, wobei die Wellenachse mit der Spindelachse fluchtet.

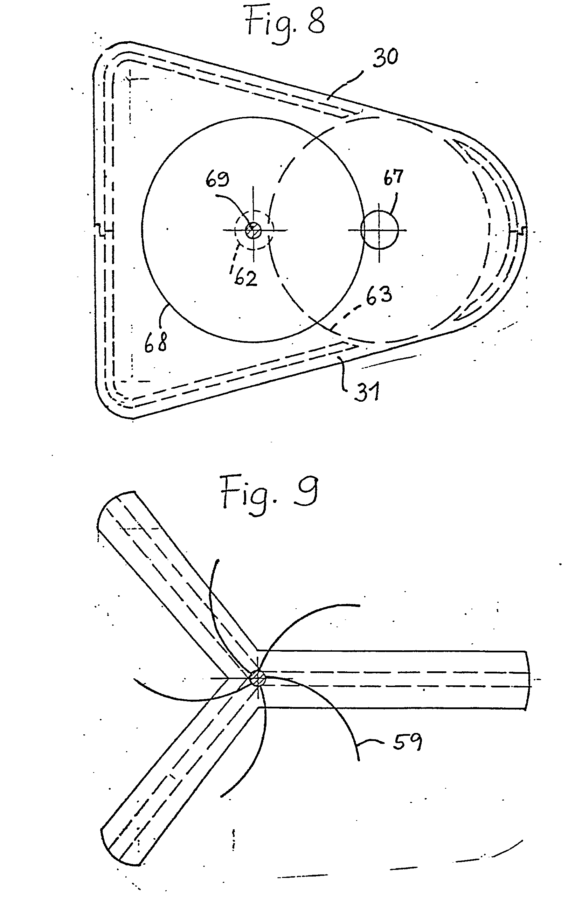

Das obere nicht dargestellte Ende der Reversierspindel 72 kann entsprechend der Reversierspindel 7 in Fig. 1 im oberen Deckel des Strassenleitpfahles gelagert sein. Auf der Reversierspindel 72 läuft bei ihrer Drehung ein Läufer 73 auf und ab, dessen Steuerbolzen 74, 75 in die Gewindeschnecken der Spindel eingreifen. Der Läufer 73 trägt einen Reflektorträger, der hier nicht dargestellt ist und der zur Reinigung der Reflektoren längs der Spindel auf- und abläuft. Zwischen den Platinen 61 bis 63 befindet sich ein dreistufig, nur teilweise dargestelltes Untersetzungsgetriebe, mit dem die relativ hohe Umdrehungszahl des Windrades in eine wesentlich kleinere Umdrehungszahl für die Reversierspindel untersetzt wird. Das im Schnitt in Fig. 9 gezeigte Flügelrad 59 läuft vor den waagerechten Windein- und -austrittsöffnungen 48 und 49. Wie Fig. 9 zeigt, ist die untere Platine sternförmig ausgebildet. Vorzugsweise ist die mittlere Platine als eine geschlossene Platte ausgebildet, die das Untersetzungsgetriebe gegenüber dem Pfahlraum für das Flügelrad weitgehend dicht abschliesst, um zu verhindern, dass in das Getriebe Schmutz oder Feuchtigkeit eindringen kann. Fig. 8 zeigt einen Querschnitt entlang den Linien VIII—VIII in Fig. 7 innerhalb eines aus den Gehäuselängshälften zusammengesetzten Pfahls. Sämtliche Teile des in den Fig. 3 bis 9 dargestellten erfindungsgemässen Strassenleitpfahls können aus Kunststoff bestehen.

## Patentansprüche

1. Hohler Straßenleitpfahl (1) für einen oder mehrere zur Markierung eines Straßenrandes vorgesehene Reflektoren (5) an einem innerhalb des Pfahles (1) beweglichen Reflektorträger (4), der mit einer ein Drehmoment abgebenden Antriebsvorrichtung (6, 7) zur langsamen Bewegung des Reflektorträgers (4) gekuppelt ist, welche wenigstens ein windangetriebenes Windrad (14) aufweist, wobei abwechselnd jeweils ein Abschnitt des Reflektors (4) vor einer Reflektorsichtöffnung (2, 3) in dem Pfahl (1) bewegt ist und ein anschließender Abschnitt des Reflektors sich zur oberflächlichen Reinigung im Kontakt mit einer innerhalb des Pfahles fest angeordneten Reinigungsvorrichtung (10—13) befindet, dadurch gekennzeichnet, daß der Reflektorträger (4) zur langsamen Auf- und Abbewegung am Läufer (6) einer im Pfahl (1) drehbar und axial unverschieblich gelagerten Reversierspindel (7) gehalten ist, daß die innerhalb des Pfahles (1) gelagerte Welle (16) des Windrades (14) mit einem die Drehbewegung des Windrades (14) untersetzenden Getriebe gekuppelt ist, das die Reversierspindel (7) antreibt, und daß der Pfahl (1) Windöffnungen (22, 23) zur Windbeaufschlagung des Windrades (14) im Pfahl (1) und zum Abzug des Windes aus dem Pfahl (1) aufweist.

2. Straßenleitpfahl nach Anspruch 1, dadurch gekennzeichnet, daß das Windrad (14) in einer Drehrichtung mit einem Freilauf versehen ist und nur in der anderen Drehrichtung als Drehantrieb auf das Getriebe zur langsamen Drehbewegung der Reversierspindel (7) einwirkt.

3. Straßenleitpfahl nach Anspruch 1, dadurch gekennzeichnet, daß der Reflektorträger (4) als eine Hülse ausgebildet ist, dessen Außenfläche mit wenigstens einem streifenförmigen Reflektor (5) versehen ist, der teilweise hinter die Reflektorsichtöffnung (2, 3) ragt und teilweise mit der Reinigungsvorrichtung (10—13) in Kontakt ist.

4. Straßenleitpfahl nach Anspruch 2, dadurch gekennzeichnet, daß die Reinigungsvorrichtung (10—13) aus wenigstens einem bürstenartigen Kunststoffkörper besteht.

5. Straßenleitpfahl nach einem oder mehreren der vorstehenden Ansprüche, dadurch gekennzeichnet, daß der Straßenleitpfahl (1) zum Einsetzen des Windrades (14) mit dem Untersetzungsgetriebe und der Reversierspindel (7) mit dem Läufer (6) und dem vom Läufer (6) getragenen Reflektorträger (4) aus zwei in Längsrichtung geteilten spritzgegossenen Kunststoffhalbschalen (30, 31) zusammengesetzt ist.

6. Straßenleitpfahl nach Anspruch 4 und 5, dadurch gekennzeichnet, daß der bürstenartige Reinigungskörper einstückig mit den spritz-gegossenen Kunststoffhalbschalen (30, 31) ist.

7. Straßenleitpfahl nach einem oder mehreren der vorstehenden Ansprüche, dadurch gekennzeichnet, daß die Reflektoren (4) in Abhängigkeit von der Temperatur wenigstens zwei verschiedene Färbungen aufweisen, wobei das vom Reflektor reflektierte Licht bei einer glatteisgefährlichen Temperatur von dem bei glatteisungefährlicher Temperatur wesentlich unterschieden ist.

**Revendications**

1. Poteau-balise creux (1), prévu pour porter au moins un réflecteur de marquage du bord d'une chaussée, chaque réflecteur (5) étant disposé sur un support (4) mobile monté à l'intérieur du poteau-balise 1, dans lequel le support est associé à un dispositif d'entraînement (6, 7) fournissant un couple moteur pour assurer à vitesse lente un déplacement du support (4) des réflecteurs; le dispositif d'entraînement (6, 7) comportant au moins une roue éolienne (14) pouvant être mise en rotation par le vent, de manière à déplacer chaque réflecteur dans le poteau-balise (1), afin d'amener chaque partie du réflecteur tantôt en regard d'une ouverture (2, 3) par laquelle le réflecteur est visible, et tantôt au contact d'un dispositif de nottoyage (10—13) monté à poste fixe à l'intérieur du poteau pour nettoyer la surface du réflecteur; le poteau étant caractérisé: en ce que le support (4) des réflecteurs est solidaire d'un coulisseau (6) monté sur une tige filetée à effet réversible (7) disposés à l'intérieur du poteau-balise (1), où cette tige peut pivoter sans se déplacer dans le sens axial, afin de communiquer au support (4) des réflecteurs un mouvement alternatif de montée et de descente à vitesse lente; en ce que l'arbre (16) de la roue éolienne (14) qui pivote à l'intérieur du poteau-balise (1) est accouplé à un réducteur, pour réduire la vitesse de rotation de la roue éolienne (14) servant à faire tourner la tige filetée à effet réversible (7); et en ce que le poteau-balise (1) présente, pour permettre le passage du vent, des ouvertures (22, 23) qui permettent au courant d'air provoqué par le vent d'agir sur la roue éolienne (14) à l'intérieur du poteau-balise (1), pour sortir ensuite hors du poteau (1).

2. Poteau-balise creux selon la revendication 1, caractérisé en ce que la roue éolienne (14) est pourvue d'un système de roue libre agissant dans l'un des sens de rotation de la roue, pour permettre à la roue éolienne d'entraîner le réducteur seulement dans son autre sens de rotation, afin de faire tourner lentement la tige filetée à effet réversible (7).

3. Poteau-balise creux selon la revendication 1, caractérisé en ce que le support (4) des réflecteurs est tubulaire et porte sur sa face externe au moins un réflecteur (5) en forme de bande; une partie de ce réflecteur se trouvant en regard de l'ouverture (2, 3) par laquelle le réflecteur est visible, et une autre partie du réflecteur se trouvant au contact du dispositif de netoyage (10, 13).

4. Poteau-balise creux selon la revendication 2, caractérisé en ce que le dispositif de nettoyage (10, 13) est constitué par au moins un élément en matière plastique, en forme de brosse.

5. Poteau-balise creux selon l'une des revendications 1 à 4, caractérisé en ce qu'il comporte un corps creux formé de deux demi-coques (30, 31) en matière plastique moulée par injection, séparées dans le sens longitudinal et assemblées l'une à l'autre en position de service; le corps creux du poteau-balise (1) étant agencé intérieurement pour le montage de la roue éolienne (14), avec le réducteur à engrenages et la tige filetée à effet réversible (7), ainsi que le coulisseau (6) monté sur cette tige, et le support (4) des réflecteurs solidaire du coulisseau.

6. Poteau-balise creux selon les revendications 4 et 5 caractérisé en ce que l'élément en forme de brosse fait partie intégrante des demi-coques (30, 31) en matière plastique, moulées par injection.

7. Poteau-balise creux selon l'une des revendications 1 à 6, caractérisé en ce que les réflecteurs peuvent présenter au moins deux couleurs différentes, en fonction de la température; la lumière renvoyée par chacun des réflecteurs en présence d'une température qui implique des risques de verglas se distinguant nettement de la lumière réfléchie lorsque la température ne correspond pas à un danger de verglas.

**Claims**

1. Hollow road guide post (1) for one or more reflectors (5) provided for marking a road edge on a reflector support (4) which is movable within the post (1) and which is coupled with a drive device (6, 7) delivering a torsional moment for slow movement of the reflector support (4), said drive device having at least one wind-driven wind wheel (14), and in alternation one section of the reflector (4) at a time moves past a reflector viewing aperture (2, 3) in the post (1) and a neighbouring section of the reflector is in contact with a cleaning device (10—13) arranged in stationary manner within the post, to effect surface cleaning, characterised in that for slow upward and downward movement the reflector support (4) is held on the runner (6) of a reversing spindle (7) mounted to be rotatable and axially non-displaceable in the post (1), that the shaft (16) of the wind wheel (14) mounted within the post (1) is coupled with a transmission which has a reduction effect on the rotary movement of the wind wheel (14) and which drives the reversing spindle (7), and that the post (1) has wind apertures (22, 23) for allowing wind to act on the wind wheel (14) in the post (1) and for escape of the wind from the post (1).

2. Road guide post according to claim 1, characterised in that the wind wheel (14) is provided in one direction of rotation with a freewheel device, and only in the other direction of rotation acts as a rotary drive on the transmission for slow movement of the reversing spindle (7) in the rotary sense.

3. Road guide post according to claim 1, characterised in that the reflector support (4) is constructed as a sleeve whose outer surface is provided with at least one strip-form reflector (5) which projects partly behind the reflector viewing aperture (2, 3) and partly contacts the cleaning device (10—13).

4. Road guide post according to claim 2, characterised in that the cleaning device (10—13) comprises at least one brush-type element made of synthetic plastic material.

5. Road guide post according to one or more of the foregoing claims, characterised in that the road guide post (1) is assembled from two longitudinally divided half shells (30, 31) made of synthetic plastic material by injection moulding for insertion of the wind wheel (14) with the reduction gear and the reversing spindle (7) with the runner (6) and the reflector support (4) carried by the runner (6).

6. Road guide post according to claims 4 and 5, characterised in that the brush-type cleaning element is integral with the injection-moulded half shells (30, 31) made of synthetic plastic material.

7. Road guide post according to one or more of the preceding claims, characterised in that the reflectors (4) have at least two different colour tones in accordance with temperature, the light reflected by the reflector when the temperature involves a risk of slippery ice differing substantially from that which obtains when the temperature involves no such risk.

Fig. 1

Fig. 2

**0 022 917**

Fig. 3a

Fig. 4 a

30

35

32

36

$\overline{V}$

33

37

31

38

34

$\overline{VI}$

39

$\overline{V}$

$\overline{VI}$

2

Fig. 3 b

Fig. 4 b

Fig. 5

Fig. 6

30

31

33

54

55

34

Fig. 7

Fig. 8

Fig. 9